# EUROPÄISCHE PATENTSCHRIFT

(11) **EP 2 658 676 B1**
(45) Veröffentlichungstag und Bekanntmachung des Hinweises auf die Patenterteilung: **25.02.2015**
(21) Anmeldenummer: 11804555.8
(22) Anmeldetag: 20.12.2011
(51) Int. Cl.: B23Q 1/01

(54) **PROGRAMMGESTEUERTE WERKZEUGMASCHINE**
PROGRAM-CONTROLLED MACHINE TOOL
MACHINE-OUTIL COMMANDÉE PAR PROGRAMME

(30) Priorität: 28.12.2010 DE 102010064271
(43) Veröffentlichungstag der Anmeldung: 06.11.2013
(73) Patentinhaber: DECKEL MAHO Pfronten GmbH, 87459 Pfronten (DE)
(72) Erfinder: LECHLEITER, Karl, 87466 Oy-Mittelberg (DE)
(74) Vertreter: Beetz & Partner mbB
(86) Internationale Anmeldenummer: PCT/EP2011/073452
(87) Internationale Veröffentlichungsnummer: WO 2012/089563

(56) Entgegenhaltungen:
- EP-A1- 1 046 460
- EP-A1- 2 263 827
- EP-A2- 1 182 005
- DE-A1-102007 044 289
- DE-U1-202010 009 414

## Beschreibung

Die Erfindung betrifft eine programmgesteuerte Werkzeugmaschine nach dem Oberbegriff des Anspruchs 1 mit einem flachen bettartigen Unterbau, mit einem am hinteren Teil des bettartigen Unterbaus angeordneten Maschinengestell, mit einem auf den beiden Seitenwänden des Maschinengestells motorisch verfahrbaren Kreuzschlitten, der einen in Richtung der Y-Koordinatenachse verfahrbaren Längsschlitten und einen in Richtung der X-Koordinatenachse verfahrbaren Querschlitten enthält, mit einer an der vorderen Stirnseite des Querschlittens in Richtung der Z-Koordinatenachse motorisch verfahrbaren Bearbeitungseinheit, in der eine Arbeitsspindel und deren Antriebsmotor angeordnet sind, und mit einem auf dem vorderen Teil des Bettes montierten Werkstücktisch.

Aus der DE 20 2010 009 414 U1 ist eine programmgesteuerte Werkzeugmaschine bekannt, die ein Maschinengestell mit zwei in Längsrichtung verlaufenden Seitenwänden aufweist. Auf diesen beiden Seitenwänden ist ein in Y-Richtung verfahrbarer Längsschlitten angeordnet. An der Vorderseite des Längsschlittens befindet sich ein in X-Richtung verfahrbarer Querschlitten, der als flache und relativ breite Platte ausgeführt ist. An der Stirnseite dieses flachen Querschlittens ist eine Bearbeitungseinheit mit vertikalem Spindelkopf in der Z-Richtung verfahrbar. Auf einem gegenüber dem Maschinengestell schmaleren Vorbau ist zwischen zwei Seitenwänden eine Werkstücktisch-Anordnung angeordnet, die für die 5-Achs-Bearbeitung von Werkstücken einen Dreh-Schwenk-Tisch in Schwenkbrückenbauweise enthält.

In der DE 20 2010 009 414 U1 ist eine gattungsgemäße programmgesteuerte Werkzeugmaschine offenbart, die ein Maschinengestell mit zwei zueinander parallelen ortsfesten Seitenwänden aufweist. An der Oberseite jeder dieser Seitenwände sind zwei zueinander parallele Längsschienen sowie jeweils dazwischen Magneten eines Linearmotors montiert. Auf diesen insgesamt vier Längsschienen ist ein Kreuzschlitten in Y-Richtung mittels der Linearmotoren verfahrbar, an dessen Vorderseite ein als Verbindungsplatte ausgebildeter Querschlitten in zwei Querschienen mittels eines Linearmotors in X-Richtung verfahrbar angeordnet ist. Weiterhin sind zwei Messsysteme zur Erfassung der Y-Koordinaten des Längsschlittens an jeweils einer der beiden Seitenwände sowie ein Gewichtsausgleichszylinder für den Z-Schlitten vorgesehen. Diese bekannte Werkzeugmaschine ist für eine schnelle und genaue 5-Achs-Bearbeitung sehr kleiner Werkstücke durch z.B. Hochgeschwindigkeitsfräsen konzipiert.

In der DE 10 2007 044 289 A1 ist eine Werkzeugmaschine beschrieben, die ein flaches durchgehendes Maschinenbett aufweist, auf dem ein in Form eines Ständers oder Portals ausgebildetes Maschinengestell angeordnet ist. Auf dem Maschinengestell ist eine Werkstückträgereinrichtung angeordnet, die zwei motorisch verfahrbare Schlitten zum gesteuerten Bewegen eines aufgespannten Werkstücks aufweist. Das Maschinenbett enthält ferner mehrere Aufnahmeräume, die in einem dem Arbeitsraum der Maschine zugehörigen Bereich nach oben offen sind und zur Aufnahme und zum Abführen von Spänen und den weiteren anfallenden Betriebsmitteln dienen.

Weiterhin ist aus der DE 199 18 359 A1 eine programmgesteuerte Werkzeugmaschine bekannt, die ein Maschinenbett und einen darauf angeordneten Ständer aufweist. Auf der Oberseite dieses Ständers ist ein Querschlitten in X-Richtung verfahrbar und an der vorderen Stirnseite dieses Ständers ist eine Konsole als Träger eines Werkstücktisches verfahrbar montiert. Das Maschinenbett weist unterhalb des Werkstücktisches und der Tischkonsole ein halbkreisförmiges Vorderteil in Art einer Bodenwanne auf. Mit dieser Werkstücktisch-Anordnung sind lediglich 3-Achs-Bearbeitungen möglich.

Moderne programmgesteuerte Werkzeugmaschinen zur spanenden Bearbeitung von Metallwerkstücken, beispielsweise Universal-Dreh- und -Fräsmaschinen sowie Bearbeitungszentren, sind in der Regel zur Durchführung von mehreren komplexen Bearbeitungsvorgängen an einem Werkstück konzipiert, bei dem eine 3- bis 5-Achs-Bearbeitung in einer Aufspannung vorgenommen werden soll. Die programmgesteuerte 5-Achs-Bearbeitung eines Werkstücks steigert die Arbeitsleistung der jeweiligen Maschine und erhöht deren Bearbeitungsgenauigkeit, weil Umspannvorgänge des Werkstücks, ggf. Zwischenlagerungen und auch Positionierfehler beim wiederholten Einspannen vermieden werden. Von wesentlicher praktischer Bedeutung sind bei diesen Maschinen u.a. eine gute Zugänglichkeit zum Werkstücktisch und zum Arbeitsraum für die Beladung des Werkstücktisches mit schweren und sperrigen Werkstücken. Da Werkstücke ab bestimmten Gewichten von einigen Kilogramm und entsprechenden Abmessungen nicht mehr per Hand, sondern nur noch mit Hilfe von Hubfördermitteln, insbesondere von Kränen, auf dem Werkstücktisch plaziert und dort gespannt werden dürfen, kommt einer guten Zugänglichkeit des Werkstücktisches und auch des gesamten Arbeitsraums eine hohe Bedeutung zu, da die Beladung des Werkstücktisches mit derartigen gewichtigen Werkstücken in der Regel mit Hilfe von Kränen erfolgt. Herkömmliche Universal-Fräsmaschinen und Bearbeitungszentren sind bezüglich der Zugänglichkeit des Werkstücktisches meist nicht optimal ausgelegt, weil der in der Regel als Schwenk-Dreh-Konstruktion ausgeführte Werkstücktisch im Raum zwischen den beiden Seitenwänden des Maschinengestells verschwenkbar angeordnet ist. Die Beladung dieses Werkstücktisches mittels Kränen oder anderen Hubgeräten mit sperrigen Werkstücken ist nicht immer problemlos möglich.

Aufgabe der Erfindung ist es, eine programmgesteuerte Werkzeugmaschine zu schaffen, die bei geringem Platzbedarf und hoher Eigensteifigkeit eine gute Zugänglichkeit zum Werkstücktisch und zum Arbeitsraum hat, um auch sperrige und schwere Werkstücke mittels Kran oder anderen Hubgeräten auf den Werkstücktisch laden zu können.

Diese Aufgabe wird bei einer gattungsgemäßen programmgesteuerten Werkzeugmaschine durch die im Patentanspruch 1 angegebenen Merkmale gelöst. Eine hohe Eigensteifigkeit der Maschinenstruktur wird einmal dadurch erreicht, dass der Unterbau in Form eines flachen Sockels mit einer zylindrischen Seiten- und Vorderwand ausgebildet und in integrierter Bauweise mit dem hinteren Maschinengestell ausgeführt ist. Die geringe Höhe des Sockels ermöglicht eine gute Zugänglichkeit zum Werkstücktisch und zum Arbeitsraum von oben und von zumindest einer Seite her. Geringe Abmessungen der Maschine ergeben sich u.a. dadurch, dass der Werkstücktisch auf dem vorderen Teilbereich des Sockels vor den beiden Seitenwänden des Maschinengestells angeordnet ist. Da der in X-Richtung verfahrbare Querschlitten eine Länge in Y-Richtung hat, die etwa dem Durchmesser des Werkstücktisches in der Y-Richtung entspricht, wird ein ausreichend großer Fahrweg für den Kreuzschlitten in Y-Richtung erzielt, und die gegenüber herkömmlichen Maschinen wesentlich vergrößerte Länge des Querschlittens begünstigt zusätzlich die angestrebt hohe Gesamtsteifigkeit. Die Ausbildung des Vorderteils des Unterbaus als flacher teilzylindrischer bzw. halbrunder Sockel ergibt weiterhin eine vorteilhafte kleine Aufstandsfläche und damit relativ geringe Abmessungen nach vorne. Darüber hinaus kann ein Bediener sich relativ nahe am Werkstück insbesondere bei dessen Einrichtvorgängen befinden, wobei die Betrachtung und auch Überwachung durch das Fenster einer hier als Rundtür ausgeführten Kabinentür erfolgt. Die Ausbildung des flachen Sockels ermöglicht ferner eine hochfeste und starre Positionierung des Maschinengestells mit seinen Seitenwänden auf dem nach hinten ggf. verlängerten Teil des Sockels, wodurch eine hohe Gesamtsteifigkeit der Grundstruktur der Maschine erreicht wird. Die angestrebt gute Zugänglichkeit des Werkstücktisches bzw. des Arbeitsraums wird unter anderem dadurch bewirkt, dass der Werkstücktisch nicht zwischen den beiden Seitenwänden, sondern vielmehr in Richtung der Y-Koordinatenachse vor den beiden Stirnseiten der Seitenwände angeordnet ist, sodass die Spannfläche des Tisches für die Werkstückbeladung mittels Hubgeräten und Kränen ohne Weiteres von oben und von der Seite her zugänglich ist. Der Platz für den Werkstücktisch wird nicht von dem gegenseitigen Abstand der beiden Seitenwände des Maschinengestells eingeengt, da sich der Werkstücktisch an der Frontseite vor den beiden Seitenwänden des Maschinengestells befindet. Daher kann der Werkstücktisch nicht nur von der Frontseite her, sondern auch von einer Schrägseite her beladen werden. Gefördert wird dies noch dadurch, dass die eine Seitenwand des Maschinengestells kürzer als die zweite Seitenwand ist, sodass sich eine vereinfachte Zugänglichkeit zum Werkstücktisch von vorne und auch von der Seite der verkürzten Gestellwand sowie jeweils von schräg oben ergibt.

Die Erfindung zeichnet sich dadurch aus, dass der auf den beiden Seitenwänden des Gestells in Y-Richtung verfahrbare Längsschlitten des Kreuzschlittens eine in Seitenansicht trapezartige Form hat und an seiner vorderen Stirnseite oben und unten die Führungen für den in Seitenansicht trapezförmigen langen Querschlitten trägt. Diese Ausbildung der beiden Schlitten bewirkt, dass der Querschlitten bei gleichbleibend hochfester Abstützung weit ausgefahren werden kann und in dieser ausgefahrenen Position des Querschlittens enge Bearbeitungstoleranzen eingehalten werden können.

Für eine 5-Achsen-Bearbeitung von Werkstücken wird bei der erfindungsgemäßen Werkzeugmaschine ein als Schwenk-Rund-Tisch ausgebildeter Werkstücktisch verwendet, der zwischen zwei zueinander fluchtenden Lagerzapfen eine nach unten versetzte Tragbrücke aufweist, auf welcher ein um seine orthogonale Mittelachse drehbarer Rundtisch gelagert ist. Die beiden Lagerzapfen sind in je einem Lagerbock gelagert, die auf dem Sockel vor den vorderen Enden der beiden Seitenwände des Maschinengestells fest montiert sind. Der in diese Tischkonstruktion integrierte Schwenk- und Rund-Tisch kann durch Linear-Drehmotoren angetrieben werden, wobei einer dieser Linearmotoren in den mittleren Brückenteil eingebaut sein kann. Der Rundtisch kann in vorgegebenen Schwenkstellungen fixiert werden, in denen dann die spanende Bearbeitung durchgeführt wird, beispielsweise Schrägbohrungen hergestellt werden. Allerdings ist auch ein sog. interpoliertes Arbeiten möglich, bei welchem der Rundtisch während eines Bearbeitungsvorganges gedreht und um die gemeinsame Drehachse der Lagerzapfen geschwenkt wird.

Um die Zugänglichkeit zum Schwenk-Rund-Tisch von oben und von einer Seite her zu begünstigen, zeichnet sich eine zweckmäßige Ausgestaltung der Erfindung dadurch aus, dass der der verkürzten Seitenwand und der zylindrischen Sockelwand benachbarte erste Lagerbock lediglich ein Lager für den Lagerzapfen aufweist und der gegenüberliegende zweite Lagerbock zusätzlich zum Lager für den zweiten Lagerzapfen weitere Antriebsmittel für die Schwenkbewegungen des Werkstücktischs trägt und damit entsprechend größere Abmessungen hat. Eine weiter verbesserte Zugänglichkeit zum Arbeitsraum wird dadurch erreicht, das die dem niedrigeren Lagerbock zugehörige Seitenwand des Maschinengestells nach vorne kürzer als die gegenüberliegende Seitenwand ist.

Zur weiteren Förderung der angestrebten hohen Gesamtsteifigkeit der Maschinenstruktur können die beiden Seitenwände des Gestells in ihrem vorderen Bereich durch eine formsteife wandartige Quertraverse miteinander verbunden sein, die Teil einer eine untere Ausnehmung begrenzenden Rückwand sein kann.

Im Folgenden wird ein Ausführungsbeispiel der Erfindung anhand der Zeichnung im Einzelnen beschrieben. Es zeigen:
- Fig. 1: eine Ausführung der erfindungsgemäßen Werkzeugmaschine in schematischer perspektivischer Darstellung und
- Fig. 2: die Maschinenausführung nach Fig. 1 in schematischer Seitenansicht.

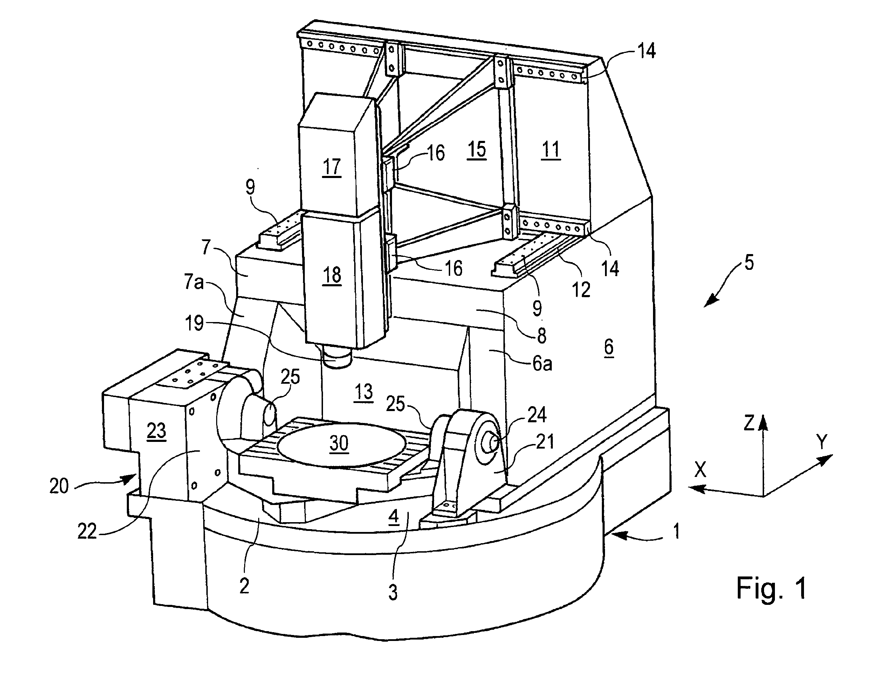

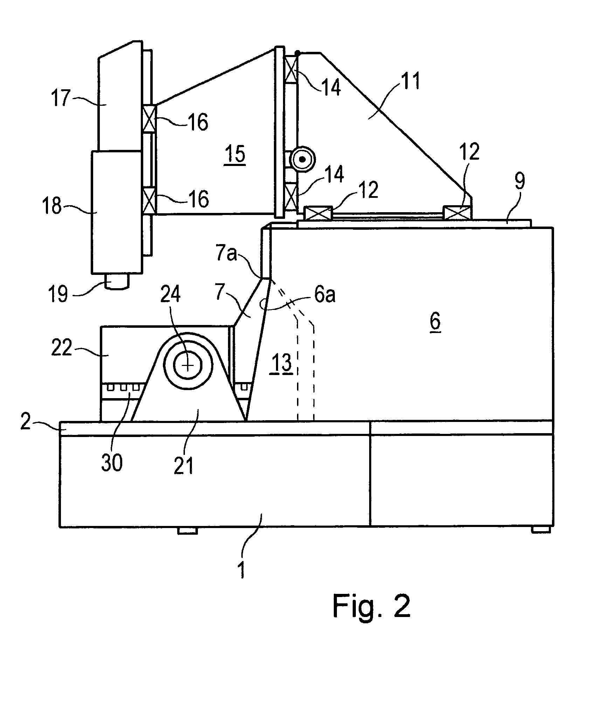

Die in Fig. 1 und 2 dargestellte Werkzeugmaschine ist eine Universal-Fräs- und --Bohrmaschine, mit der Werkstücke in fünf Achsen in einer Aufspannung spanend bearbeitet werden können. Ein flacher Sockel 1 hat in seinem nach vorn seitlich weisenden Bereich eine teilzylindrische Form, wobei die geringfügig erhöhte Seitenwand 2 des Sockels 1 einen von einem schrägflächigen Boden begrenzten Freiraum 4 umschließt. Auf dem hinteren Bereich des Sockels ist ein Maschinengestell starr in integrierter Bauweise befestigt, das zwei vertikale Seitenwände 6, 7 und eine vordere Quertraverse 8 oberhalb einer Rückwand enthält, die fest miteinander und mit dem Sockel 1 verbunden sind und damit eine sog. Monoblock-Struktur bilden. Die in Fig. 1 rechte Seitenwand 6 ist nach vorne kürzer als die linke Seitenwand 7. Auf den Oberseiten der beiden Seitenwände 6, 7 ist je eine Führungsschiene 9, 10 montiert, auf denen ein Längsschlitten 11 in Richtung der Y-Koordinatenachse verfahrbar ist. Wie aus Fig. 2 ersichtlich, hat der Längsschlitten 11 eine in Seitenansicht etwa dreieckige Kontur und ist mit der horizontalen Kathetenseite über je zwei Führungsschuhe 12 auf den beiden Führungsschienen 9, 10 mittels einer - nicht dargestellten - Antriebseinheit verfahrbar. In Fig. 1 ist die hintere Position und in Fig. 2 die vordere Position des Längsschlittens 11 gezeigt. An der vorderen Stirnseite des in Seitenansicht etwa dreieckförmigen Längsschlittens 11 sind zwei vertikal beabstandete horizontale Führungsschienen 14 angeordnet, in denen ein Querschlitten 15 mit seiner hinteren Breitseite in Richtung der X-Koordinatenachse motorisch verfahrbar geführt ist. Dieser Querschlitten 15 besteht aus einer hochsteifen Plattenkonstruktion und hat eine in Draufsicht etwa dreieckige Gestalt, wie in Fig. 1 gezeigt. Die hintere Breitseite dieses Querschlittens 15 ist in den beiden relativ weit voneinander beabstandeten Führungsschienen 14 mittels jeweils zwei Führungsschuhen abgestützt und geführt. An der vorderen Schmalseite des Querschlittens 15 ist ein in der vertikalen Z-Achse an linearen Führungen 16 motorisch verfahrbarer Vertikalschlitten 17 angeordnet, der eine Bearbeitungseinheit 18 mit einem Fräskopf mit Arbeitsspindel 19 trägt.

In Y-Richtung vor den beiden Seitenwänden 6, 7 des Maschinengestells 5 befindet sich eine Werkstücktischanordnung, die bei dem dargestellten Ausführungsbeispiel als sog. Schwenk-Rund-Tisch 20 ausgeführt ist. Diese Werkstücktischanordnung verfügt über zwei seitliche Lagerböcke 21, 22, von denen jeder über jeweils zwei Tragfüße auf dem Boden 3 des Sockels 1 befestigt ist. Wie aus Fig. 1 ersichtlich, ist der in Fig. 1 rechte Lagerbock 21 vor der Stirnseite 6a der rechten kürzeren Seitenwand und der linke Lagerbock 22 vor der Stirnseite 7a der linken Seitenwand 7 des Gestells 5 angeordnet. Der in Fig. 1 rechte Lagerbock 21 enthält lediglich ein geeignetes Lager für einen Drehzapfen 24, der an einer seitlichen Wange eines brückenartigen Mittelteils 25 angeordnet ist. In Flucht zu dem Lagerzapfen 24 ist ein weiterer Drehzapfen 26 an der anderen Seite des Mittelteils 25 in dem zweiten Lagerbock 22 drehbar gelagert. Diesem zweiten Lagerbock 22 ist eine Antriebseinheit 23 bestehend aus einem E-Motor und ggf. einem Untersetzungsgetriebe zugeordnet, deren Abmessungen - wie aus Fig. 1 ersichtlich - die Abmessungen des rechten Lagerbocks 21 erheblich übersteigen.

Auf dem brückenartigen Mittelteil 25 ist ein Rundtisch 30 zur Aufnahme eines - nicht dargestellten - Werkstücks angeordnet, der über eine eingebaute Antriebseinheit, z.B. einen Dreh-Linearmotor, in Rotation versetzt werden kann, um eine Winkelpositionierung sowie auch fortlaufende Bearbeitungen während einer Drehbewegung am Werkstück durchführen zu können. Durch die geringe Höhe des rechten Lagerbocks 21 ist der von dem Rundtisch 30 im Mittelteil 25 und dem Bewegungsbereich der Arbeitsspindel 19 begrenzte Arbeitsraum der Werkzeugmaschine von vorn, von schräg rechts und auch von rechts wesentlich besser zugänglich für eine Werkstückbeladung und auch für die Überwachung als von der linken Seite her, an der sich der zweite Lagerbock 22 und die Antriebseinheit befinden. Wie aus Fig. 1 ersichtlich, ist in der Rückwand des Gestells unter der Quertraverse 8 eine Aushöhlung 13 im Maschinengestell ausgebildet, in die der Schwenk-Rund-Tisch 25, 30 kollisionsfrei bei einer Schwenkbewegung nach rückwärts um die Drehachse der beiden Drehzapfen 24, 26 eintauchen kann.

Der Längsschlitten 11 und der Querschlitten 15 bilden einen Kreuzschlitten, der in Y-Richtung eine langgestreckte Form hat, wobei - wie insbesondere aus Fig. 2 ersichtlich - die Längserstreckung des Querschlittens 15 in Y-Richtung etwa dem Durchmesser des Rundtisches 30 auf dem Mittelteil 25 der Tischanordnung entspricht, sodass in der in Fig. 2 dargestellten Position der Arbeitsraum vollständig überspannt wird. In der vollständig nach vorn ausgefahrenen Stellung gemäß Fig. 2 befindet sich die Stirn des Längsschlittens 11 etwa oberhalb der Stirnseite 6a der kürzeren Seitenwand 6 des Gestells.

Die Erfindung ist nicht auf die vorstehend beschriebene und in den Figuren 1, 2 dargestellte Werkzeugmaschine beschränkt, sondern umfasst auch Varianten dieser Maschinenausführung. So kann beispielsweise anstatt einer Schwenk-Rund-Tischanordnung auch eine einfache Werkstücktisch-Anordnung mit einem starren Werkstücktisch verwendet werden.

## Patentansprüche

1. Programmgesteuerte Werkzeugmaschine, mit
- einem bettartigen Unterbau (1, 2),
- einem Maschinengestell (5) mit zwei vertikalen und parallelen Seitenwänden (6, 7),
- einem Kreuzschlitten (11, 15), dessen Längsschlitten (11) in Richtung der Y-Koordinatenachse auf den beiden Seitenwänden (6, 7) des Maschinengestells (5) motorisch verfahrbar ist und dessen Querschlitten (15) an der Vorderseite des Längsschlittens (11) in Richtung der X-Koordinatenachse motorisch verfahrbar geführt ist,
- einer am Querschlitten (15) in Richtung der vertikalen Z-Koordinatenachse mittels eines Vertikalschlittens (17) motorisch verfahrbaren Bearbeitungseinheit (18) mit integrierter Arbeitsspindel (19) und
- einer auf dem Unterbau (1, 2) vor den beiden Seitenwänden (6, 7) des Maschinengestells angeordneten Werkstücktisch-Anordnung (20),
**dadurch gekennzeichnet, dass**
- der Unterbau in Form eines flachen Sockels (1) mit zylindrischer Seiten- und Vorderwand ausgebildet und mit dem Maschinengestell starr befestigt ist,
- die Werkstücktisch-Anordnung (20) auf dem vorderen Teilbereich des flachen Sockels (1) angeordnet ist,
- der Querschlitten (15) eine Länge in Richtung der Y-Koordinatenachse hat, die etwa dem Durchmesser des Werkstücktischs (30) bzw. des Arbeitsraums in Richtung der Y-Koordinatenachse entspricht, und
- der Querschlitten (15) in Seitenansicht und in Draufsicht jeweils Trapezform hat und der Vertikalschlitten (17) der Bearbeitungseinheit (18) an Führungen (16) an der vorderen Schmalseite des Querschlittens (15) geführt ist.

2. Werkzeugmaschine nach Anspruch 1,
**dadurch gekennzeichnet, dass**
die eine Seitenwand (6) des Maschinengestells (5) nach vorn kürzer als die andere Seitenwand (7) ist.

3. Werkzeugmaschine nach einem der vorstehenden Ansprüche,
**dadurch gekennzeichnet, dass**
die Werkstücktischanordnung (20) einen Schwenk-Rund-Tisch (25, 30) enthält, dessen beide Lagerböcke (21, 22) auf dem flachen Sockel (1) des bettartigen Unterbaus (1, 2) vor den vorderen Enden (6a, 7a) der beiden Seitenwände (6, 7) des Maschinengestells (5) fest montiert sind.

4. Werkzeugmaschine nach Anspruch 3,
**dadurch gekennzeichnet, dass**
der der kürzeren Seitenwand (6) des Maschinengestells (5) und der zylindrischen Seitenwand (2) des Sockels (1) benachbarte Lagerbock (21) lediglich ein Lager für den einen Drehzapfen (24) des Schwenk-Rund-Tisches (25) aufweist, und am gegenüberliegenden Lagerbock (22) zusätzlich zum Lager für den anderen Drehzapfen (26) weitere Antriebsmittel (23) für die Schwenkbewegungen des Werkstücktischs (30) um die gemeinsame Achse der Lagerböcke (21, 22) angeordnet sind.

5. Werkzeugmaschine nach einem der vorstehenden Ansprüche,
**dadurch gekennzeichnet, dass**
sich die zylindrische Seitenwand (2) des Sockels (1) von einem seitlichen Bereich unterhalb des zweiten Lagerbocks (22) über die Frontseite des Sockels (1) bis zu einem seitlichen Bereich unterhalb der kürzeren Seitenwand (6) erstreckt.

6. Werkzeugmaschine nach einem der vorstehenden Ansprüche,
**dadurch gekennzeichnet, dass**
die beiden Seitenwände (6, 7) des Maschinengestells (5) in ihrem vorderen Bereich durch eine formsteife Quertraverse (8) oberhalb einer Aushöhlung (13) in der Rückwand starr miteinander verbunden sind und nach vorn geneigte Stirnseiten (6a, 7a) haben.

7. Werkzeugmaschine nach einem der vorstehenden Ansprüche,
**dadurch gekennzeichnet, dass**
eine einfache Faltenbalgabdeckung an der Frontseite des Längsschlittens (11) montiert ist, die den Arbeitsraum vorn Maschinenraum trennt.

## Claims

1. A program-controlled machine tool, comprising
- a bed-type substructure (1,2),
- a machine frame (5) having two vertical and parallel side wails (6, 7),
- a compound slide (11, 15), the longitudinal slide (11) of which can be moved in the direction of the Y-coordinate axis on the two side walls (5, 7) of the machine frame by means of a motor and the cross slide (15) of which is guided along the front side of the longitudinal slide (11) so as to be movable in the direction of the X-coordinate axis by means of a motor,
- a machining unit (18) which is movable along the cross slide (15) in the direction of the vertical Z-coordinate axis by means of a vertical slide (17) using a motor and which has an integrated work spindle (19) and
- a workpiece table arrangement (20) arranged on the substructure (1, 2) in front of the two side walls (6, 7) of the machine frame, **characterized in that**
- the substructure is mode in the form of a flat base (1) having cylindrical side and front walls and is firmly attached to the machine frame,
- the workpiece table arrangement (20) is arranged on the front section of the flat base (1),
- the cross slide (15) has a length in the direction of the Y-coordinate axis which corresponds approximately to the diameter of the workpiece table (30) and/or the work space in the direction of the Y-coordinate axis, and
- the cross slide (15) has a trapezoidal shape in both the side view and the top view, and the vertical slide (17) of the machining unit (18) is guided along guides (16) on the front narrow side of the ross slide (15).

2. The machine tool according to claim 1,
**characterized in that**
one side wall (6) of the machine frame (5) is shorter towards the front than the other side wall (7).

3. The machine tool according to any of the preceding claims,
**characterized in that**
the workpiece table arrangement (20) contains a swiveling rotary table (25, 30), the two bearing blocks (21, 22) of which are firmly mounted on the flat base (1) of the bed-type substructure (1, 2) in front of the front ends (6a, 7a) of the two side walls (6, 7) of the machine frame (5).

4. The machine tool according to claim 3,
**characterized in that**
the bearing block (21) adjacent to the shorter side wall (6) of the machine frame (5) and the cylindrical side wall (2) of the base (1) only has one bearing for one pivot (24) of the swiveling rotary table (25) and further drive means (23) for the swivel movements of the workpiece table (30) are arranged about the common axis of the bearing bocks (21, 22) on the opposite bearing block (22) in addition to the bearing for the other pivot (26).

5. The machine tool according to any of the preceding claims,
**characterized in that**
the cylindrical side wall (2) of the base (1) extends from a lateral area below the second bearing block (22) via the front side of the base (1) to a lateral area below the shorter side wall (6).

6. The machine tool according to any of the preceding claims,
**characterized in that**
the two side walls (6, 7) of the machine frame (5) are rigidly connected to one another in the front area thereof by a dimensionally rigid crossbar (8) above a cavity (13) in the rear wall and have front sides (6a, 7a) inclined to the front.

7. The machine tool according to any of the preceding claims,
**characterized in that**
a simple bellows cover is mounted on the front side of the longitudinal slide (11) and separates the work space from the machine chamber,

## Revendications

1. Machine-outil commandée par programme, avec
- une infrastructure de type table (1, 2),
- un bâti de machine (5) avec deux parois latérales verticales et parallèles (6, 7),
- un chariot croisé (11, 15) dont le chariot longitudinal (11) peut se déplacer de manière motorisée suivant l'axe des coordonnées Y sur les deux parois latérales (6, 7) du bâti de la machine (5), et dont le chariot transversal (15) situé sur la face avant du chariot longitudinal (11) peut se déplacer de manière motorisée suivant l'axe des coordonnées X,
- un outil d'usinage (18) à broche intégrée (19), pouvant se déplacer de manière motorisée verticalement suivant l'axe des coordonnées Z au moyen d'un chariot vertical (17), et
- un dispositif de table porte-pièce (20) disposé sur l'infrastructure (1, 2) et situé devant les deux parois latérales (6, 7) du bâti de la machine,
**caractérisée en ce que**
- l'infrastructure a la forme d'un socle plat (1) muni d'une paroi latéral et avant, de forme cylindrique, solidaire du bâti de la machine,
- le dispositif de table porte-pièce (20) est disposé sur la partie avant du socle plat (1),
- le chariot transversal (15) présente une longueur qui suit l'axe des coordonnées Y et correspond à peu près au diamètre de la table porte-pièce (30) ou de l'espace de travail dans le sens de l'axe des coordonnées Y, et
- le chariot transversal (15), vu de côté comme de dessus, est de forme trapézoïdale, et le chariot vertical (17) de l'outil d'usinage (18) se déplace sur des rails (16) situés sur le côté étroit à l'avant du chariot croisé (15).

2. Machine-outil selon la revendication 1,
**caractérisée en ce que**
l'une des parois latérales (6) du bâti de la machine (5) est plus courte vers l'avant que l'autre paroi latérale (7).

3. Machine-outil selon l'une quelconque des revendications précédentes,
**caractérisée en ce que**
le dispositif de table porte-pièce (20) comporte une table circulaire pivotante (25, 30) dont les deux supports de palier (21, 22) sont montrés de manière fixe sur le socle plat (1) de l'infrastructure de type table (1,2) devant les extrémités avant (6a, 7a) des deux parois latérales (6, 7) du bâti de la machine (5).

4. Machine-outil selon la revendication 3,
**caractérisée en ce que**
le support de palier proche de la paroi latérale la plus courte (6) du bâti de la machine (5) et de la paroi latérale cylindrique (2) du socle (1) présente un seul palier pour un tourillon (24) de la table tournante pivotante (25), et **en ce que**, sur le support de palier opposé (22), outre le palier pour l'autre tourillon, sont disposés d'autre moyens d'entraînement (23) chargés des mouvements de pivotement de la table porte-pièce (30) autour de l'axe commun des supports de palier (21, 22).

5. Machine-outil selon l'une quelconque des revendications précédentes,
**caractérisée en ce que**
la paroi latérale cylindrique (2) du socle (1) va d'une partie latérale située en dessous du deuxième support de palier (22) jusqu'à une partie latérale située en dessous de la paroi latérale la plus courte (6) en passant par la partie avant du socle (1).

6. Machine-outil selon l'une quelconque des revendications précédentes,
**caractérisée en ce que**
les deux parois latérales (6, 7) du bâti de la machine (5) sont, dans leur partie avant, solidaires de la paroi arrière au moyen d'une traverse indéformable (8) située au-dessus d'un évidement (13), et présentent une partie inclinée sur la face avant (6 a, 7a).

7. Machine-outil selon l'une quelconque des revendications précédentes,
**caractérisée en ce que**
une protection à soufflets est montée sur la face avant du chariot longitudinal (11) et cloisonne l'espace de travail de l'espace de la machine.
